## Europäisches Patentamt

## European Patent Office

## Office européen des brevets

(19)

(11) Publication number: **0 003 864**
**B1**

(12) **EUROPEAN PATENT SPECIFICATION**

(45) Date of publication of patent specification: **14.10.81**

(51) Int. Cl.³: **F 16 B 21/20, F 16 B 7/14**

(21) Application number: **79200089.5**

(22) Date of filing: **21.02.79**

(54) **Device slidably arranged on a guide-rod with means for securing the device thereon.**

(30) Priority: **24.02.78 NL 7802078**

(43) Date of publication of application:
**05.09.79 Bulletin 79/18**

(45) Publication of the grant of the European patent:
**14.10.81 Bulletin 81/41**

(84) Designated Contracting States:
**BE CH DE FR GB SE**

(56) References cited:
**DE - A - 2 306 685**
**DE - A - 2 318 796**
**GB - A - 812 916**
**GB - A - 1 230 843**
**US - A - 3 734 441**

(73) Proprietor: **FLORACO B.V.**
**Heereweg 441A**
**NL-2161 DB Lisse (NL)**

(72) Inventor: **Ooms, Hans**
**Witte de Withstraat 13**
**Noordwijk (NL)**
Inventor: **Smidt, Joseph Jan Marie**
**Const. Huygenslaan 51**
**Leiden (NL)**

(74) Representative: **Bakker, Gilles Egbert, Ir.**
**Breitnerlaan 146**
**NL-2596 HG Den Haag (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Device slidably arranged on a guide-rod with means for securing the device thereon

The invention relates to a device which is slidably arranged on at least one guide-rod and provided with means for securing the device in an arbitrary position on the guide-rod, said means comprising a lever supported on the device, a compression spring being arranged between the lever and an other part of the device remote therefrom, said lever being pivotably movable against the force exerted thereon by the compression spring to a position in which it is substantially free from engagement with the guide-rod and under the action of the compression spring will be urged to a position at which a part thereof engages the guide-rod such that the lever is blocked from movement with respect thereto.

Such a device is known by the British patent specification 812,916, and according to this is used as a locking device for telescopic pedestals. As indicated in this patent specification the known device has a positive action to prevent either extension or shortening of the stem while the lever is in its canted operative position, although in fact a limited movement between the two parts in one direction is possible against the action of the compression spring. Normally the lever is urged against a fulcrum connected with one part of the device by the force of the compression spring.

Now the invention aims at making such a device suitable as a guiding device for the boxes in a box-closing machine wherein the flaps of cartons are folded down into place on the top of the carton and thereafter fixed into sealed relationship thereto by means of adhesive tape for example.

In this case it is often desired that the guiding device is resiliently enough to give somewhat to allow passing of a carton with too large a dimension whilst all other cartons, conforming to normal dimensions, would only just engage the device in their passage through the machine.

According to the invention therefore the device is characterized in that the lever supported on the device solely by means of the compression spring whereby said device is resiliently displacable with respect to the guide-rod against the action of the compression spring when the lever is in a fixed position and when a force exceeding a preset value of the compression spring is applied to the device in the direction of the guide-rod.

In accordance with a further elaboration of the invention the guide-rod engaging part of the lever is shaped such that the device can still be displaced on the guide-rod with the lever in the blocked condition in that direction in which the device is urged by the compression spring acting upon the lever.

By means of this it is possible to make a very accurate adjustment of the position of the device since a possibly needed final adjustment of the device can be made by giving it a tap. There is then no need to pivot the lever with respect to the device to free it from engagement with the guide-rod and thereafter to re-engage it, which handling might easily allow a slight displacement of the device with respect to the final desired position.

According to a preferred embodiment of the invention, the lever is in a position substantially perpendicular to the longitudinal axis of the guide-rod and is provided with an aperture through which the guide-rod may extend with ample play therebetween, in which the lever is urged by the compression spring toward a pin fixed to the device and arranged between the compression spring and the guide-rod perpendicular to the plane in which the lever and the compression spring lie, the pin being arranged to cooperate with a recess formed in one side of the lever, the deepest part of which recess is adapted to the shape of the pin and arranged to lie nearest the guide-rod, said recess tapering from this part away from said guide-rod toward that side of the lever in which it is included, said lever being coupled to the further part of the device only by the compression spring.

This construction is thus particularly simple in view of the fact that the lever, substantially forming the only moving part of the device, only engages the pin with its recess such that no hinge-points are present.

The invention is now to be described with reference to the accompanying drawings showing an embodiment, in which:

fig. 1 shows a side elevation of the device according to the present invention as adapted for use with a box-closing machine, and in which only some of the parts are illustrated however, the other parts as such are not of importance to the invention,

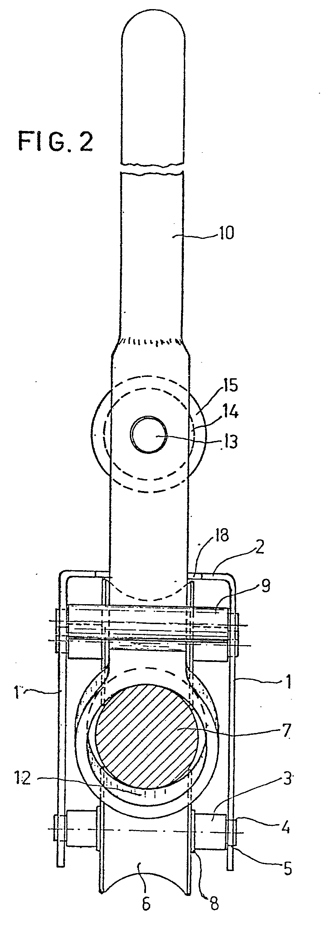

fig. 2 shows a cross-sectional view of the device on line II—II of fig. 1, and wherein only the most important of the parts are illustrated in the interests of clarity.

The device illustrated in the drawings comprises two side-plates 1 and a top-plate 2 which could, for example, be formed from one piece of sheet material by bending.

Shafts 3 are accomodated between the side plates 1 and end portions 4 of which shafts 3 are worked to a smaller diameter and accomodated in holes 5 in the side plates 1. Rollers 6 are mounted on respective shafts 3, the shape of said rollers being adapted to the cross-sectional form of the guide-rod 7. The rollers 6 can be retained on the shafts 3 by circlips 8 for example.

A pin 9, which can be of the same design as the shafts 3, is also accomodated between the side plates 1.

The pin 9 is arranged in operative relationship with a lever 10 by means of a recess 11 in the latter, which lever is also provided with an aperture 12 therethrough, which aperture 12 can pass the guide-rod 7 therethrough with ample play therebetween. A spring accomodating boss 14 is affixed to the lever 10 by means of a screw 13, and over which one end of a compression spring 15 is fitted. The other end of the compression spring 15 is affixed to a second spring accomodating boss 16 which is in turn arranged on the support 17 affixed to the top plate 2 of the device. The top plate 2 is further provided with a slot 18 to permit passage of the lever 10 therealong.

A bent plate 20 is fitted to the top plate 2 by means of screws 19, and further fixed to a second top plate 22 by screws 21. At least one guide roller 23 is arranged between the plates 20 and 22. The guide roller 23 is supported by a shaft (not shown) and retained by a washer 24 and a screw 25 thereabove. It will be self-evident that the shaft (not shown) is fixed at its lower end to the plate 20.

As previously implied herein, the guide roller 23 can constitute part of a box-closing machine for example; however the device can naturally be adapted for use with many machines in which it is of importance that the device be quickly secured to a guide-rod therefore and can still resiliently give somewhat.

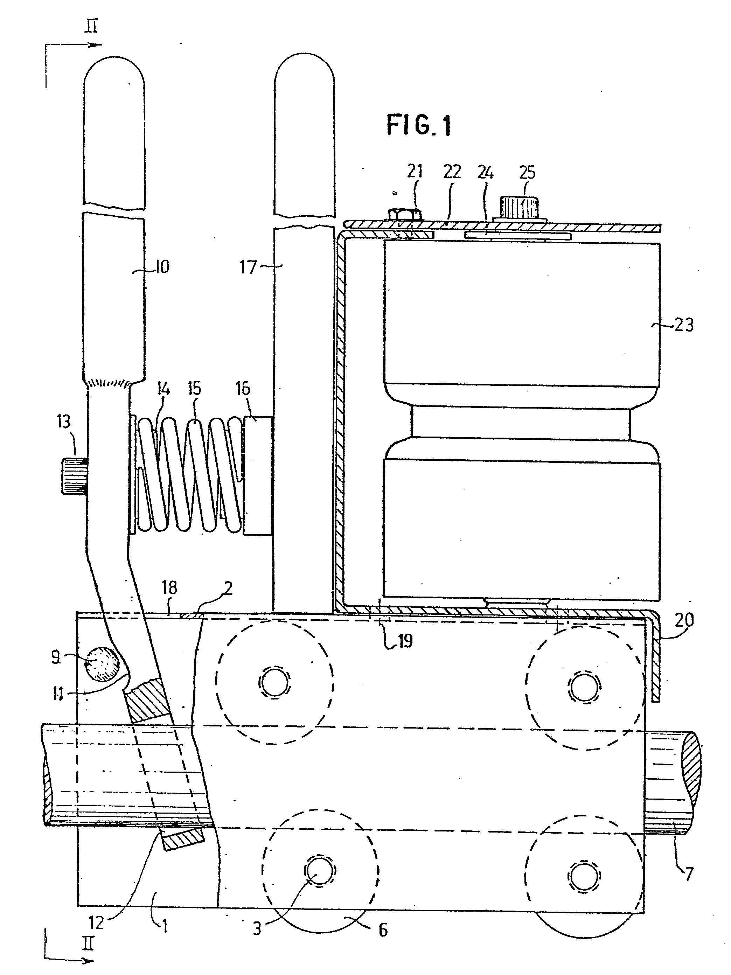

When the device occupies the position shown in fig. 1 the lever 10 is blocked from movement with respect to the guide-rod 7 through the engagement of the edges of the aperture 12 thereof with the guide-rod 7. When a leftwardly directed force (as viewed in fig. 1) is applied to the device and particularly to the guide rollers 23, the lever 10 will be maintained in its position relative to the guide-rod 7. The spring 15, however, will be compressed somewhat and whereby the device as a whole, will be moved leftward somewhat. After removal of the displacing force the device will move back to the position shown in fig. 1. With movement of the device leftward, the pin 9 will be positioned such that it lies further away from the lever 10, but this has no influence at all on the position of the latter with respect to the guide-rod 7. It only means that the lever 10 engages the guide-rod 7 even more firmly because the force exerted thereon by the compression spring 15 will increase.

When it becomes necessary to secure the device in another position on the guide-rod 7, one only needs to grasp both the lever 10 and the support 17 and squeeze them and by doing so overcoming the force exerted on the lever by the compression spring 15. This last action will bring the deepest part of the recess 11 into engagement with the pin 9, and whereupon the edges of the aperture 12 in the lever 10 will be released from engagement with the guide-rod 7 and free space will exist therebetween. The device can then be easily repositioned where required on the guide-rod 7, and after which the grip on the lever 10 and support 17 can be released. On effecting this release the device assumes the condition shown in fig. 1 whereby it is again secured on the guide-rod 7.

When the lower edge of the lever 10, as shown in fig. 1, is slightly radiused its grip on the guide-rod 7 will be less. The device as a whole can then be moved rightward without the necessity to operate lever 10 with respect thereto. The left upper edge of the opening 12 will slide over the surface of the guide-rod 7 so that the device remains blocked with respect to any force being exerted on the device in the leftward direction.

As already stated herein, the drawings only illustrate those parts of the device which are of importance to the invention, other parts being necessary, however, to ensure that the device cannot turn about the axis of the guide-rod 7. To this end for example, members can be provided to extend from one of the side plates 1 and which are provided with a sliding support at their ends remote from the side plate. Such arrangements, however, will be obvious to an expert.

**Claims**

1. A device slidably arranged on at least one guide-rod (7) and provided with means for securing the device in an arbitrary position on the guide-rod (7), said means comprising a lever (10) supported on the device, a compression spring (15) being arranged between the lever (10) and an other part (17) of the device remote therefrom, said lever (10) being pivotably movable against the force exerted thereon by the compression spring (15) to a position in which it is substantially free from engagement with the guide-rod and under the action of the compression spring (15) will be urged to a position at which a part (12) thereof engages the guide-rod such that the lever is blocked from movement with respect thereto, characterized in that the lever (10) is supported on the device solely by means of the compression spring (15) whereby said device is resiliently displaceable with respect to the guide-rod when the lever (10) is in a fixed position and when a force exceeding a preset value of the compression spring (15) is applied to the device in the direction of the guide-rod (7).

2. A device according to claim 1, characterized in that the guide-rod (7) engaging part (12) of the lever (10) is shaped such that the device can still be displaced on the guide-rod (7) with the lever (10) in the blocked condition in that direction in which the device is urged by the compression spring (15) acting upon the lever (10).

3. A device according to claim 1 or 2, characterized in that the lever (10) is in a position substantially perpendicular to the longitudinal axis of the guide-rod (7) and is provided with an aperture (12) through which the guide-rod (7) may extend with ample play therebetween, in which the lever (10) is urged by the compression spring (15) toward a pin (9) fixed to the device and arranged between the compression spring (15) and the guide-rod (7) perpendicular to the plane in which the lever (10) and compression spring (15) lie, the pin (9) being arranged to cooperate with a recess (11) formed in one side of the lever (10), the deepest part of which recess is adapted to the shape of the pin (9) and is arranged to lie nearest the guide-rod (7), said recess (11) tapering from this part away from said guide-rod (7) toward the side of the lever (10) in which it is included, said lever (10) being coupled to the further part of the device only by the compression spring (15).

**Revendications**

1. Un dispositif monté coulissant sur au moins une barreguide (7) et muni de moyens de fixation du dispositif dans une position arbitraire sur la barre-guide, ces moyens comprenant un levier (10) supporté par le dispositif, un ressort de compression (15) disposé entre le levier (10) et une autre partie (17) du dispositif éloignée de celui-ci, le levier (10) étant mobile en pivotation contre la force exercée sur lui par le ressort de compression (15) en une position dans laquelle il est substantiellement exempt d'engagement avec la barre-guide et, sous l'action du ressort de compression (15) le levier étant poussé en avant vers une position dans laquelle une partie (12) du levier engrène la barre-guide de telle manière que le mouvement du levier est bloqué par rapport à la barre-guide, caractérisé par le fait que le levier (10) est supporté sur le dispositif seulement au moyen du ressort de compression (15) par lequel ce dispositif, est déplaçable de façon souple par rapport à la barre-guide (7) contre l'action du ressort de compression (15), lorsque le levier (10) est dans une position fixe et lorsqu'une force dépassant une valeur préfixée du ressort de compression (15) est appliquée au dispositif dans la direction de la barre-guide (7).

2. Un dispositif selon la revendication 1, caractérisé par le fait que la barre-guide (7) engrenant une partie (12) du levier (10) est conformée afin que le dispositif puisse être déplacé encore sur la barre-guide (7) avec le levier (10) en condition de blocage, dans la direction où le dispositif est poussé en avant par le ressort de compression (15) agissant sur le levier (10).

3. Un dispositif selon l'une quelconque des revendications 1 et 2, caractérisé par le fait que le levier (10) est dans une position substantiellement perpendiculaire à l'axe longitudinal de la barre-guide (7) et qu'il est muni d'une ouverture (12) par laquelle la barre-guide (7) peut se prolonger avec un large jeu entre elles;

dans lequel le levier (10) est poussé en avant par le ressort de compression (15) vers une broche (9) fixée au dispositif et agencée entre le ressort de compression (15) et la barre-guide (7) perpendiculaire au plan dans lequel se trouvent le levier (10) et le ressort de compression (15), la broche (9) étant arrangée pour coopérer avec un évidement (11) formé dans un côté du levier (10), la partie la plus profonde de cet évidement étant adaptée à la forme de la broche (9) et disposée pour être le plus près possible de la barre-guide (7), cet évidement (11) s'amincissant à partir de cette zone s'écartant de la barre-guide (7) vers le côté du levier (10) dans lequel il est inclus, le levier (10), étant couplé à l'autre partie du dispositif seulement par le ressort de compression (15).

**Patentansprüche**

1. Eine Vorrichtung welche verschiebbar an mindestens eine Führungsstange (7) angeordnet ist und mit Mitteln zur Verriegelung der Vorrichtung in einer beliebigen Position an der Führungsstange (7) versehen ist, welche Mittel einen Hebel (10) umfassen welcher von der Vorrichtung unterstützt wird, eine Druckfeder (15) welche zwischen dem Hebel (10) und einem weiteren in Abstand liegenden Teil (17) der Vorrichtung angeordnet ist, welcher Hebel (10) schwenkbar bewegt werden kann entgegen den von der Druckfeder (15) darauf ausgeübten Kraft nach einer Stellung in welcher er nahezu ausser Anliegung mit der Führungsstange ist und mittels der Wirkung der Druckfeder (15) nach einer Stellung gedrückt werden soll in welcher ein Teil (12) desselben an der Führungsstange anliegt in solcher Weise dass der Hebel gegen Bewegung hinsichtlich dieser verriegelt ist, dadurch gekennzeichnet, dass der Hebel (10) nur mittels der Druckfeder (15) von der Vorrichtung unterstützt wird, wobei die Vorrichtung federnd verstellbar ist hinsichtlich der Führungsstange (7) entgegen der Wirkung der Druckfeder (15) wenn der Hebel (10) sich in einer festen Stellung befindet und wenn eine Kraft die einen vorher eingestellten Wert der Druckfeder (15) übertrifft auf die Vorrichtung in Richtung der Führungsstange (7) ausgeübt wird.

2. Eine Vorrichtung gemäss Anspruch 1, dadurch gekennzeichnet, dass der mit der Führungsstange (7) in Berührung kommenden Teil (12) des Hebels (10) in solcher Weise ausgebildet ist dass die Vorrichtung noch über die Führungsstange (7) verstellt werden kann mit dem Hebel in der verriegelten Stellung in der Richtung in welcher die Vorrichtung gedrückt wird von der Druckfeder (15) die auf den Hebel (10) einwirkt.

3. Eine Vorrichtung gemäss Anspruch 1 oder 2, dadurch gekennzeichnet, dass der Hebel (10) eine Stellung einnimmt welche nahezu senkrecht zur Längsachse der Führungsstange (7) steht und mit einer Öffnung (12) versehen ist durch welche die Führungsstrange (7) sich mit etwas Spiel erstreckt, in welcher der Hebel (10) von der Druckfeder (15) zu einem Bolzen (9) gedrückt wird, welcher an der Vorrichtung zwischen der Druckfeder (15) und der Führungsstange (7) angeordnet ist senkrecht zu der Ebene in welcher der Hebel (10) und die Druckfeder (15) liegen, welcher Bolzen (9) angeordnet ist zur Zusammenwirkung mit einer in einer Seite des Hebels (10) angeordnete Aussparung (11), von welcher der tiefste Teil der Form des Bolzens (9) angepasst ist und in solcher Weise angeordnet ist dass er in der Nähe der Führungsstange (7) liegt, welche Aussparung (11) kegelich von diesem Teil abläuft weg von der Führungsstange (7) zu der Seite des Hebels (10) in welcher sie angeordnet ist, welcher Hebel (10) nur mittels der Druckfeder (15) mit dem weiteren Teil der Vorrichtung verdunden ist.

FIG.1

FIG. 2